# EUROPEAN PATENT APPLICATION

(11) **EP 2 189 354 A1**
(43) Date of publication of application: **26.05.2010**
(21) Application number: 08360038.7
(22) Date of filing: 20.11.2008
(51) Int. Cl.: B62B 7/08

(54) **Foldable toy stroller**

(71) Applicant: Huang, Ming-Tai, Taipei (TW)
(72) Inventor: Huang, Ming-Tai, Taipei (TW)
(74) Representative: Metz, Paul

(57) **Abstract**

A foldable toy stroller includes two cross-hinged bottom tubes (10) and two cross-hinged rear tubes (12). Each bottom tube (10) includes two ends (100, 102) spaced and an arcuate intermediate portion (104). Each rear tube (12) includes two ends (120, 122) and an arcuate intermediate portion (124). The ends (100, 102) of the bottom tubes (10) are coplanar and on the same level when the toy stroller is in an extended state. The ends (120, 122) of the rear tubes (12) are coplanar. An overall volume of the toy stroller in a folded state is reduced.

## Description

### BACKGROUND OF THE INVENTION

The present invention relates to a foldable stroller and, more particularly, to a foldable toy stroller.

Toy strollers generally include two handles, a frame, and a plurality of wheels. The frame is generally foldable to allow easy carriage and storage. Furthermore, the frame generally includes movable and lockable joints so that the toy stroller can be retained in a folded state or an extended state. However, the frame may unfold due to accidental impact to the joints, such that a child playing the toy stroller may be injured due to falling or being impinged by the frame. U.S. Patent No. 5,845,925 discloses a safety device mounted to the rear tubes of the stroller to avoid unintentional folding. However, the stroller has many parts and, thus, has high costs in manufacturing and assembly. Furthermore, the rear wheels of the stroller can not be detached, so that the package for the stroller occupies a large space, leading to increased costs for transport.

Thus, a need exists for a toy stroller that has fewer parts without sacrificing the structural strength while having a smaller volume for transport.

### BRIEF SUMMARY OF THE INVENTION

The present invention solves this need and other problems in the field of toy strollers by providing, in a preferred form, a foldable toy stroller including a first bottom tube having a first longitudinal axis and first and second ends spaced from each other along the first longitudinal axis. The first bottom tube further includes a first arcuate intermediate portion between the first and second ends thereof. A second bottom tube includes a second longitudinal axis and first and second ends spaced from each other along the second longitudinal axis. The second longitudinal axis is coplanar with the first longitudinal axis. The second bottom tube further includes a second arcuate intermediate portion between the first and second ends thereof. The first and second bottom tubes being cross hinged at the first and second arcuate intermediate portions. A first rear tube includes a third longitudinal axis and first and second ends spaced from each other along the third longitudinal axis. The first rear tube further includes a third arcuate intermediate portion between the first and second ends thereof. A second rear tube includes a fourth longitudinal axis and first and second ends spaced from each other along the fourth longitudinal axis. The fourth longitudinal axis is coplanar with the third longitudinal axis. The second rear tube further includes a fourth arcuate intermediate portion between the first and second ends thereof. The first and second tubes are cross hinged at the third and fourth arcuate intermediate portions. Two linking members each have an end and a pivotal portion. The end of each linking member is pivotably connected to the first end of one of the first and second bottom tubes and to the second end of one of the first and second rear tubes. Two front legs each include an upper section, a lower section, and an intermediate section between the upper and lower sections. A front wheel unit is pivotably connected to the lower section of each front leg. The intermediate section of each front leg is pivotably connected to the pivotal portion of one of the linking members. A connecting member is mounted to a portion of each front leg adjacent to the upper section. The toy stroller further includes two handle tubes each having upper and lower ends. The upper end of each handle tube is pivotably connected to the first end of one of the first and second rear tubes. A handle is mounted to the upper end of each handle tube. The lower end of each handle tube is pivotably connected to one of the connecting members. A retaining member is slideably mounted on a portion of each handle tube adjacent to the lower end of the handle tube. Each retaining member has a positioning hole. The upper section of each front leg is received in the positioning hole of one of the retaining members when the handle tubes are generally parallel to the front legs, preventing rotation of the handle tubes relative to the front legs. A rear wheel unit is mounted to the second end of each of the first and second rear tubes.

When the retaining members are moved away from the front legs, so that the upper ends of the front legs are disengaged from the positioning holes of the retaining members, the front tubes are pivotable toward the front legs, the first and second bottom tubes are moveable toward each other, the first and second rear tubes are moveable toward each other, the handle tubes are moveable toward each other, and the front legs are movable toward each other, allowing folding of the toy stroller.

The present invention will become clearer in light of the following detailed description of an illustrative embodiment of this invention described in connection with the drawings.

### DESCRIPTION OF THE DRAWINGS

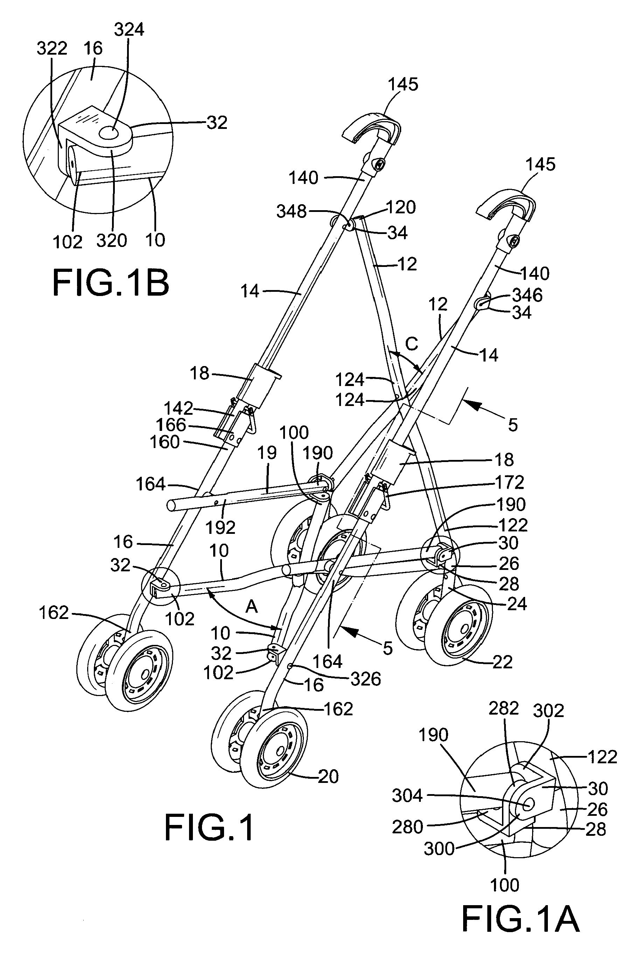

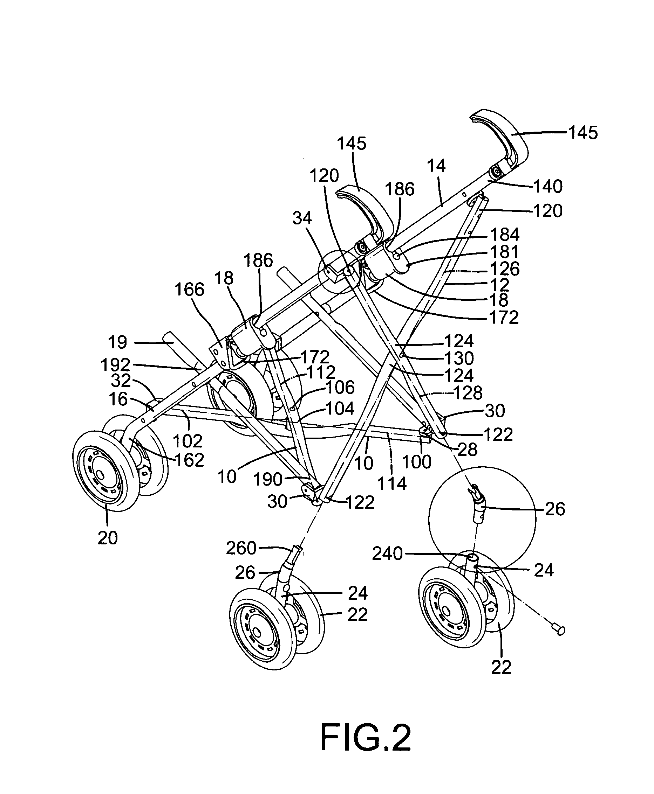

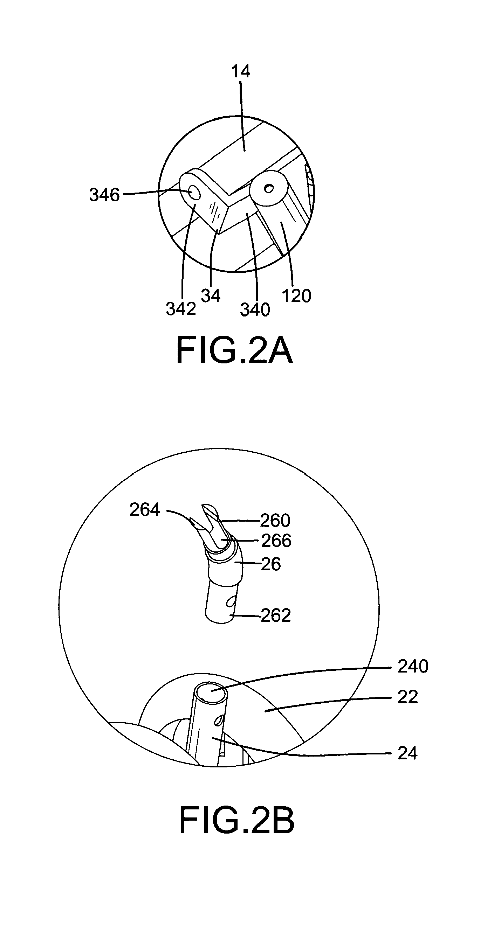

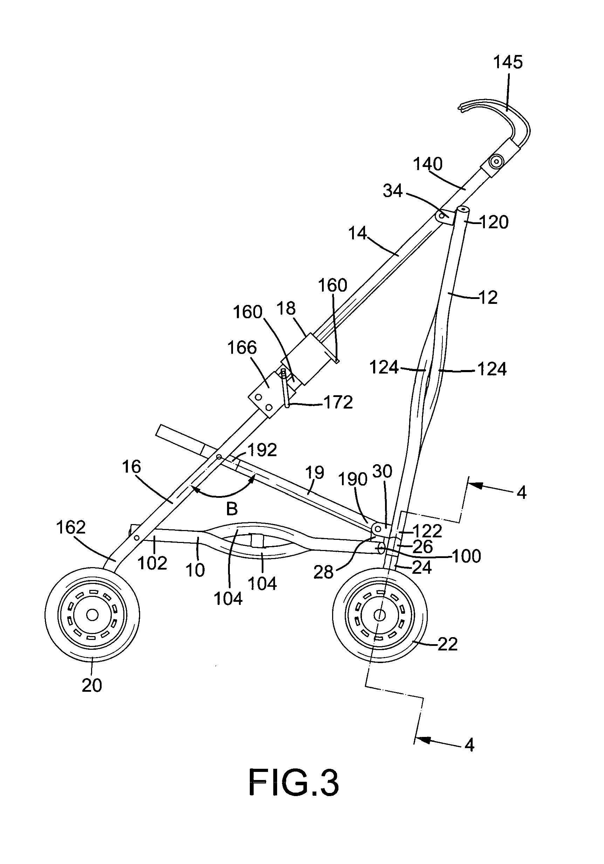

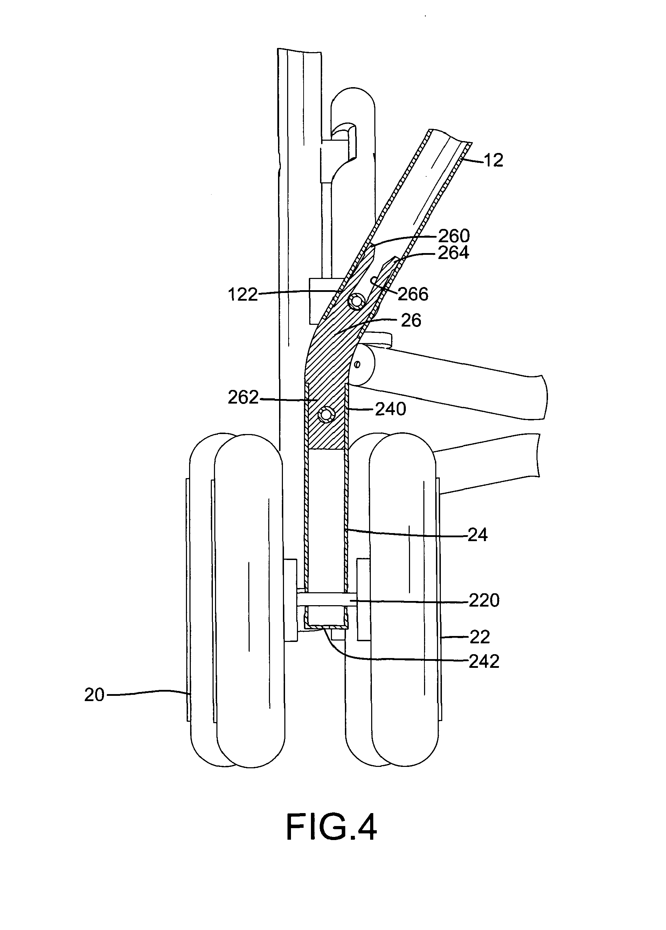

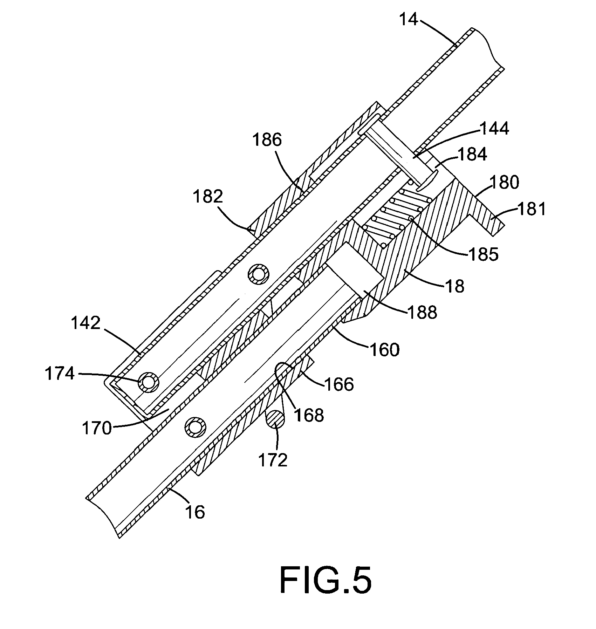

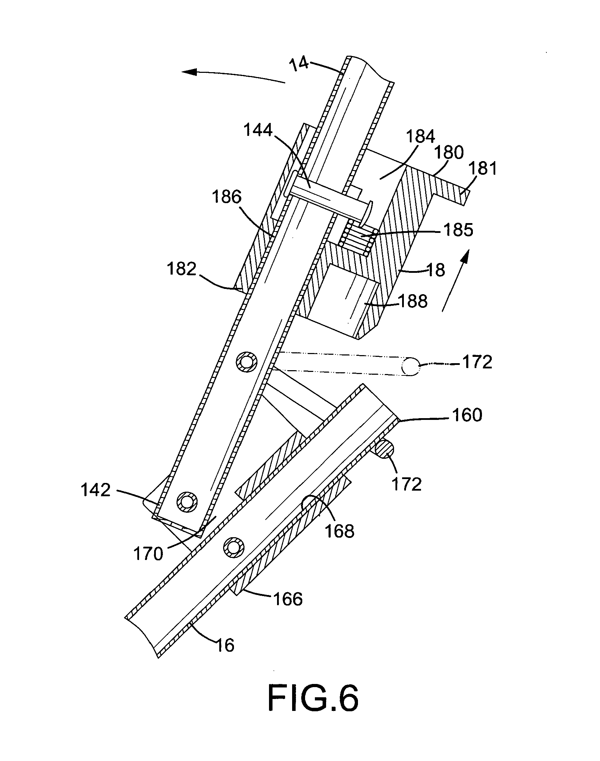

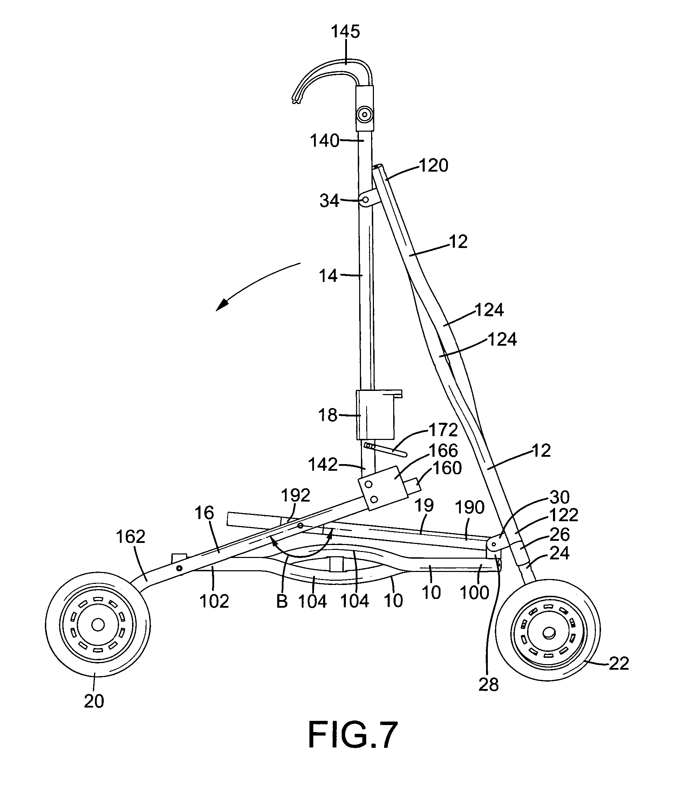

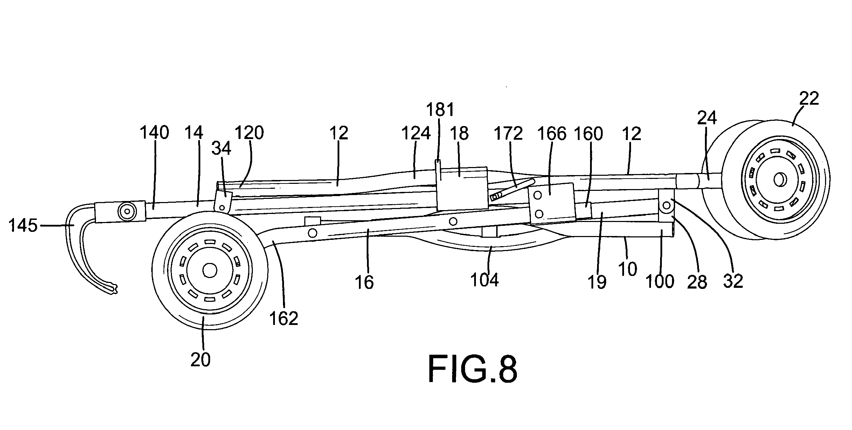

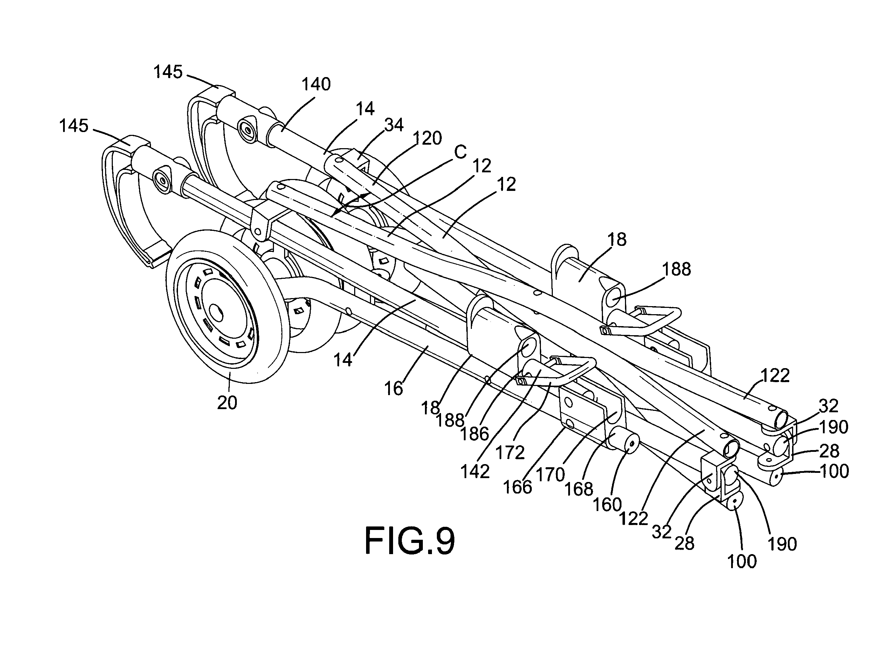

The illustrative embodiment may best be described by reference to the accompanying drawings where:
. Fig. 1 shows a perspective view of a toy stroller according to the preferred teachings of the present invention with the stroller in an assembled and extended state.
. Fig. 1A shows an enlarged view of a circled portion at a right portion of the toy stroller of Fig. 1.
. Fig. 1B shows an enlarged view of a circled portion at a left portion of the toy stroller of Fig. 1.
. Fig. 2 shows a partly-exploded, perspective view of the toy stroller of Fig. 1.
. Fig. 2A shows an enlarged view of a circled portion at an upper portion of the toy stroller of Fig. 2.
. Fig 2B shows an enlarged view of a circled portion at a lower portion of the toy stroller of Fig. 2.
. Fig. 3 shows a side view of the toy stroller of Fig. 1.
. Fig. 4 shows a partial, cross sectional view of the toy stroller of Fig. 1 according to section line 4-4 of Fig. 3.
. Fig. 5 shows a partial, cross sectional view of the toy stroller of Fig. 1 according to section line 5-5 of Fig. 1.
. Fig. 6 is a view similar to Fig. 5, illustrating folding of the toy stroller.
. Fig. 7 shows a side view of the toy stroller of Fig. 1 with the toy stroller being folded.
. Fig. 8 shows a side view of the toy stroller of Fig. 1 with the toy stroller completely folded.
. Fig. 9 shows a perspective view of the toy stroller of Fig. 1 with the toy stroller completely folded and with rear wheel units of the toy stroller detached.

All figures are drawn for ease of explanation of the basic teachings of the present invention only; the extensions of the figures with respect to number, position, relationship, and dimensions of the parts to form the preferred embodiment will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first", "second", "third", "fourth", "lower", "upper", "inner", "outer", "side", "end", "portion" , "section", "longitudinal", "lateral", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

A toy stroller according to the preferred teachings of the present invention is shown in the drawings and includes cross-hinged first and second bottom tubes 10. Specifically, first bottom tube 10 includes a first longitudinal axis 112 and first and second ends 100 and 102 spaced from each other along first longitudinal axis 112. First bottom tube 10 further includes an arcuate intermediate portion 104 between first and second ends 100 and 102. Arcuate intermediate portion 104 of first bottom tube 10 defines a groove that faces upward when the toy stroller is in an extended state. Second bottom tube 10 includes a second longitudinal axis 114 coplanar and at an angle A with first longitudinal axis 112 and first and second ends 100 and 102 spaced from each other along second longitudinal axis 114. Arcuate intermediate portion 104 of second bottom tube 10 defines a groove that faces downward when the toy stroller is in the extended state. According to the most preferred form shown, a middle of arcuate intermediate portion 104 of first bottom tube 10 is pivotably connected by a pivot 106 to a middle of arcuate intermediate portion 104 of second bottom tube 10. Furthermore, first and second ends 100 and 102 of first and second bottom tubes 10 are at the same level and on the same plane. Specifically, first and second longitudinal axes 112 and 114 of first and second bottom tubes 10 are located at the same level and on the same plane. This allows reduction in an overall volume of the toy stroller in a folded state.

According to the preferred form shown, the toy stroller further includes two substantially L-shaped first pivotal members 28 each having a first section 280 and a second section 282 perpendicular to first section 280. First section 280 of each first pivotal member 28 is pivotably connected to first end 100 of one of first and second bottom tubes 10.

According to the preferred form shown, the toy stroller further includes two substantially L-shaped second pivotal members 30 each having a first section 300 and a second section 302 perpendicular to second section 300. First section 300 of each second pivotal member 30 is pivotably connected by a pin 304 to second section 282 of one of first pivotal members 28.

According to the preferred form shown, the toy stroller further includes two substantially L-shaped third pivotal members 32 each having a first section 320 and a second section 322 perpendicular to first section 320. First section 320 of each third pivotal member 32 is pivotably connected by a pin 324 to second end 102 of one of first and second bottom tubes 10.

According to the preferred form shown, the toy stroller further includes two tubular linking members 19 each having an end 190 pivotably connected by pin 304 to second section 282 of one of first pivotal members 28. Each linking member 19 further includes a pivotal portion 192 between end 190 and the other end of linking member 19.

According to the preferred form shown, the toy stroller further includes two tubular front legs 16 each having an upper section 160, a lower section 162, and an intermediate section 164 between upper and lower sections 160 and 162. Each front leg 16 is pivotably connected by a pin 326 to second section 322 of one of third pivotal members 32 at a portion intermediate lower section 162 and intermediate section 164. Pivotal portion 192 of each linking member 19 is pivotably connected to intermediate section 164 of one of front legs 16. Each linking member 19 is at an angle B with one of front legs 16. A front wheel unit 20 is coupled to lower section 162 of each front leg 16.

According to the preferred form shown, the toy stroller further includes cross-hinged first and second rear tubes 12. First rear tube 12 includes a third longitudinal axis 126 and first and second ends 120 spaced from each other along third longitudinal axis 126. First rear tube 12 further includes an arcuate intermediate portion 124 between first and second ends 120 and 122. Arcuate intermediate portion 124 of first rear tube 12 defines a groove that faces forward when the toy stroller is in the extended state. Second rear tube 12 includes a fourth longitudinal axis 128 coplanar and at an angle C with third longitudinal axis 126. Second rear rube 12 further includes first and second ends 120 and 122 spaced from each other along fourth longitudinal axis 128. Arcuate intermediate portion 124 of second rear tube 12 defines a groove that faces rearward when the toy stroller is in the extended state. According to the most preferred form shown, a middle of arcuate intermediate portion 124 of first rear tube 12 is pivotably connected by a pivot 130 to a middle of arcuate intermediate portion 124 of second rear tube 12. Furthermore, first and second ends 120 and 122 of first and second rear tubes 12 are on the same plane. Specifically, third and fourth longitudinal axes 126 and 128 of first and second rear tubes 12 are located on the same plane. This allows reduction in the overall volume of the toy stroller in the folded state.

According to the preferred form shown, the toy stroller further includes two substantially L-shaped fourth pivotal members 34 each having a first section 340 and a second section 342 perpendicular to first section 340. First section 340 of each fourth pivotal member 34 is pivotably connected by a pin 348 to first end 120 of one of first and second rear tubes 12.

According to the preferred form shown, the toy stroller further includes two rear wheel units 22, two connecting tubes 24, and two coupling members 26. Each rear wheel unit 22 includes an axle 220. Each connecting tube 24 has a lower end 242 rotatably receiving axle 220 of one of rear wheel units 22 and an upper end 240 located at a level higher than rear wheel unit 22 when the toy stroller is in the extended state. Each coupling member 26 includes a first end 260 having an outer diameter corresponding to an inner diameter of rear tubes 12. Each coupling member 26 further includes a second end 262 fixed in upper end 240 of one of connecting tubes 24 by a rivet. First end 260 of each coupling member 26 includes a longitudinal groove 266, forming two resilient tab 264 spaced by longitudinal groove 266. Resilient tabs 264 in the original position have a maximum width lager than the inner diameter of rear tubes 12. The width of longitudinal groove 266 can be changed by pressing resilient tabs 264 toward each other, so that first end 260 of each coupling member 26 can be inserted into second end 122 of one of first and second rear tubes 12. When the pressing force is released, resilient tabs 264 of first end 260 of each coupling member 26 tend to return to their original position and, thus, press against and in friction contact with an inner periphery of second end 122 of one of first and second rear tubes 12. In this way, rear wheel units 22 can be easily attached to second ends 122 of first and second rear tubes 12.

According to the preferred form shown, the toy stroller further includes two handle tubes 14 each having an upper and 140 and a lower end 142. Each handle tube 14 is pivotably connected by a pin 346 to second section 342 of one of fourth pivotal members 34 at a portion adjacent to upper end 140. A handle 145 is fixed to upper end 140 of each handle tube 14. A user can grip handles 145 and move the toy stroller.

According to the preferred form shown, the toy stroller further includes two connecting members 166 each of which is mounted to a portion of one of front tubes 16 adjacent to upper section 160 of front tube 16. Each connecting member 166 is substantially L-shaped in cross section and includes a through-hole 168 and a compartment 170 in an end thereof. Lower end 142 of each handle tube 14 is pivotably received in compartment 170 of one of connecting members 166 and pivotable about a pivot axis defined a pin 174. Upper section 166 of each front leg 16 is extended through through-hole 168 of one of connecting members 166 and beyond connecting member 166. A retaining member 18 is slideably mounted on each handle tube 14 at a location above connecting member 166. Each retaining member 18 includes upper and lower ends 180 and 182 and a through-hole 186 extending from upper end 180 through lower end 182. A protrusion 181 is formed on an outer periphery of upper end 180 of each retaining member 18. Upper end 180 of each retaining member 18 further includes a compartment 184 in communication with through-hole 186. Lower end 182 of each retaining member 18 includes a positioning hole 188 aligned with through-hole 168 of one of connecting members 166. Each handle tube 14 is extended through through-hole 186 of one of retaining members 18. A peg 144 is extended through a section of each handle tube 14 received in compartment 184 of one of retaining members 18 and has an end extending into compartment 184, and a spring 185 is mounted between a bottom wall of compartment 184 and the end of peg 144, biasing retaining member 18 to a position so that positioning hole 188 receives one of front legs 16 when the toy stroller is in the extended state, preventing rotation of front leg 16 relative to handle tube 14.

According to the preferred form shown, the toy stroller further includes two safety rings 172 each having a first end pivotably connected to a section of one of handle tubes 14 between one of connecting members 166 and one of retaining members 18. Each safety ring 172 further includes two lateral sides and a bottom side interconnected between the lateral sides. Each safety ring 172 falls and rests on one of retaining members 18 due to gravitational force such that retaining member 18 is received between the lateral sides.

When the toy stroller is in a fully extended state, handle tubes 14 are generally parallel to front legs 16. Lower end 142 of each handle tube 14 is completely received in compartment 170 of one of connecting members 166. Positioning hole 188 of each retaining member 18 is aligned with upper section 160 of one of front legs 16. Each retaining member 18 is biased by one of springs 185 to a position, so that positioning hole 188 receives one of front legs 16 to prevent rotation of front leg 16 relative to handle tube 14 (FIG. 5). In this state, first and second ends 100 and 102 of first and second bottom tubes 10 are on the same plane and at the same level above the ground on which the toy stroller is placed. Furthermore, angle A between first and second longitudinal axes 112 and 114 of first and second bottom tubes 10 is in the order of 69°, angle B between each linking member 19 and one of front legs 16 is 110°, and angle C between third and fourth longitudinal axes 126 and 128 of first and second rear tubes 12 is in the order of 59°.

When folding of the toy stroller is desired, the user grips protrusion 181 of each retaining member 18 and moves retaining member 18 upward along one of handle tubes 14 to overcome one of springs 185 until upper section 160 of front leg 16 is no longer received in positioning hole 188 (FIG. 6). Each handle tube 14 can be pivoted relative to one of front legs 16. However, further pivotal movement of handle tubes 14 relative to front legs 16 is limited by safety rings 172 when the bottom side of each safety ring 172 presses against one of front leg 16. Thus, injury to the user due to unintentional folding of the toy stroller can be avoided even if retaining members 18 are inadvertently moved.

Safety ring 172 can be manually moved away from front legs 16 (FIG. 7), so that handle tubes 14 can be pivoted toward front legs 16. First and second rear tubes 12 are also pivoted toward front legs 16 together with handle tubes 14. Second pivotal members 30 allow pivotal movement of linking members 19 toward first and second bottom tubes 10, which in turn, causes pivotal movement of front legs 16 toward first and second bottom tubes 10. Thus, first and second bottom tubes 10 are moveable toward each other, first and second rear tubes 12 are moveable toward each other, handle tubes 14 are moveable toward each other, and front legs 16 are movable toward each other, allowing folding of the toy stroller. When the toy stroller is in the completely folded state (FIGS. 8 and 9), angle A between first and second longitudinal axes 112 and 114 of first and second bottom tubes 10 is in the order of 13°, angle B between each linking member 19 and one of front legs 16 is 180°, and angle C between third and fourth longitudinal axes 126 and 128 of first and second rear tubes 12 is in the order of 13°.

It can be appreciated that rear wheel units 22 do not have to be assembled during transport. Specifically, rear wheel units 22 can be placed in spaces between the toy stroller and the package receiving the toy stroller, reducing the overall volume of the package. Thus, the costs of packaging and transport can be cut. Furthermore, since rear wheel units 22 are not coupled with the portions of the toy stroller to which safety rings 172 are mounted, the number of parts of the toy stroller according to the preferred teachings of the present invention is smaller than that of conventional toy strollers. However, according to tests, the structural strength of the toy stroller according to the preferred teachings still meets the safety requirements for toy strollers.

Now that the basic teachings of the present invention have been explained, many extensions and variations will be obvious to one having ordinary skill in the art. For example, second end 122 of each rear tube 12 can include notches or protrusions, and resilient tabs 264 of connecting members 26 can include protrusions or notches for engaging with the notches or protrusions of rear tube 12. Pegs 114 can be directly fixed on outer peripheries of handle tubes 14.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A foldable toy stroller comprising, in combination :
a first bottom tube (10) including a first longitudinal axis (112) and first and second ends (100, 102) spaced from each other along the first longitudinal axis (112), with the first bottom tube (10) further includes a first arcuate intermediate portion (104) between the first and second ends (100, 102) thereof;
a second bottom tube (10) including a second longitudinal axis (114) and first and second ends (100, 102) spaced from each other along the second longitudinal axis (114), with the second longitudinal axis (114) being coplanar with the first longitudinal axis (112), with the second bottom tube (10) further including a second arcuate intermediate portion (104) between the first and second ends (100, 102) thereof, with the first and second bottom tubes (10) being cross hinged at the first and second arcuate intermediate portions (104);
a first rear tube (12) including a third longitudinal axis (126) and first and second ends (120, 122) spaced from each other along the third longitudinal axis (126), with the first rear tube (12) further including a third arcuate intermediate portion (124) between the first and second ends (120, 122) thereof;
a second rear tube (12) including a fourth longitudinal axis (128) and first and second ends (120, 122) spaced from each other along the fourth longitudinal axis (128), with the fourth longitudinal axis (128) being coplanar with the third longitudinal axis (126), with the second rear tube (12) further including a fourth arcuate intermediate portion (124) between the first and second ends (120, 122) thereof, with the first and second tubes (12) being cross hinged at the third and fourth arcuate intermediate portions (124);
two linking members (19) each having an end (190) and a pivotal portion (190), with the end (190) of each of the two linking members (19) being pivotably connected to the first end (100) of one of the first and second bottom tubes (10) and to the second end (122) of one of the first and second rear tubes (12);
two front legs (16) each including an upper section (160), a lower section (162), and an intermediate section (164) between the upper and lower sections (160, 162), with a front wheel unit (20) being pivotably connected to the lower section (162) of each of the two front legs (16), with the intermediate section (164) of each of the two front legs (16) being pivotably connected to the pivotal portion (192) of one of the two linking members (19);
two connecting members (166) each mounted to a portion of each of the two front legs (16) adjacent to the upper section (160);
two handle tubes (14) each having upper and lower ends (140, 142), with the upper end (140) of each of the two handle tubes (14) being pivotably connected to the first end (120) of one of the first and second rear tubes (12), with a handle (145) being mounted to the upper end (142) of each of the two handle tubes (14), with the lower end (142) of each of the two handle tubes (14) being pivotably connected to one of the two connecting members (166);
two retaining members (18) each slideably mounted on a portion of each of the two handle tubes (14) adjacent to the lower end (142) of the handle tube (14), with each of the two retaining members (18) each having a positioning hole (188), with the upper section (160) of each of the two front legs (16) being received in the positioning hole (188) of one of the two retaining members (18) when the two handle tubes (14) are generally parallel to the two front legs (16), preventing rotation of the two handle tubes (14) relative to the two front legs (16); and
two rear wheel units (22) each mounted to the second end (122) of one of the first and second rear tubes (12),
wherein when the two retaining members (18) are moved away from the two front legs (16), so that the upper ends (160) of the two front legs (16) are disengaged from the positioning holes (188) of the two retaining members (18), the two front tubes (14) are pivotable toward the two front legs (16), the first and second bottom tubes (10) are moveable toward each other, the first and second rear tubes (12) are moveable toward each other, the two handle tubes (14) are moveable toward each other, and the two front legs (16) are movable toward each other, allowing folding of the toy stroller.

2. The foldable toy stroller as claimed in claim 1, with each of the two rear wheel units (22) including an axle (220), with the toy stroller further comprising, in combination:
two connecting tubes (24) each having an upper end (240) and a lower end (242), with the lower end (240) of each of the two connecting tubes (24) rotatably receiving the axle (220) of one of the two rear wheel units (22); and
two coupling members (26) each having a first end (260) and a second end (262), with the second end (262) of each of the two coupling members (26) being fixed to the upper end (240) of one of the two connecting tubes (24), with the first end (260) of each of the two coupling members (26) being detachably mounted in the second end (122) of one of the first and second rear tubes (12).

3. The foldable toy stroller as claimed in claim 2, with the with the first end (260) of each of the two coupling members (26) including a longitudinal groove (266) and two resilient tabs (264) spaced from each other by the longitudinal groove (266), and with the two resilient tabs (264) of each of the two coupling members (26) in friction contact with an inner periphery of the second end (122) of one of the first and second rear tubes (12).

4. The foldable toy stroller as claimed in claim 1, further comprising, in combination: two safety rings (172) each including a first end pivotably connected to a section of one of the two handle tubes (14) between one of the two connecting members (166) and one of the two retaining members (18), with each of the two safety rings (172) further including two lateral sides and a bottom side interconnected between the lateral sides, with each of the two safety rings (172) falling and resting on one of the two retaining members (18) due to gravitational force such that the retaining member (18) is received between the lateral sides, with the two safety rings (172) limiting pivotal movement of the two handle tubes (14) relative to the two front legs (16) to prevent folding of the toy stroller, with the two safety rings (172) being manually movable to disengage from the two retaining members (18) to allow folding of the toy stroller.

5. The foldable toy stroller as claimed in claim 1, with the first and second ends (100, 102) of the first and second bottom tubes (10) being on a first plane, with the first and second ends (120, 122) of the first and second rear tubes (12) being on a second plane,
wherein when the toy stroller is in an extended state, the first arcuate intermediate portion (104) of the first bottom tube (10) faces upward, the second arcuate intermediate portion (104) of the second bottom tube (10) faces downward, the third arcuate intermediate portion (124) of the first rear tube (12) faces forward, the fourth arcuate intermediate portion (124) of the second rear tube (12) faces rearward, and the first and second ends (100, 102) of the first and second bottom tubes (10) are at the same level.
